# FASCICULE DE BREVET EUROPEEN

(11) **EP 1 426 003 B1**
(45) Date de publication et mention de la délivrance du brevet: **06.07.2005**
(21) Numéro de dépôt: 03356184.6
(22) Date de dépôt: 20.11.2003
(51) Int. Cl.: A47J 37/12

(54) **Appareil electrique de cuisson comportant une cuve montee fixe dans un boitier**
Elektrisches Kochgerät mit einem feststehenden in einem Gehäuse angeordneten Behälter
Electrical cooking appliance with a fixed bowl mounted in a housing

(30) Priorité: 06.12.2002 FR 0215458; 02.04.2003 FR 0304100
(43) Date de publication de la demande: 09.06.2004
(73) Titulaire: SEB S.A., 69130 Ecully (FR)
(72) Inventeur: Dirand, Pascal, 21160 Marsannay-La-Cote (FR)
(74) Mandataire: Kiehl, Hubert

(56) Documents cités:
- EP-A- 0 914 023
- WO-A-93/02609
- FR-A- 2 692 130
- US-A- 5 927 181

## Description

La présente invention se rapporte aux appareils électriques de cuisson comportant une cuve destinée à recevoir les aliments à cuire, cette cuve étant montée fixe dans un boîtier. La présente invention concerne notamment, mais non exclusivement, les friteuses électriques.

Il est connu du document EP 0 295 159 de réaliser un appareil électrique de cuisson du type précité, dans lequel le boîtier comporte une paroi latérale périphérique entourant la cuve à distance. Une résistance électrique de chauffage est fixée au fond de la cuve. Le bord de la cuve repose sur une bague réalisée en matériau résistant en continu à la température du bord supérieur de la cuve. La paroi latérale périphérique peut être réalisée en matériau ne résistant pas en continu à la température du bord de la cuve, un tel matériau étant plus économique. La paroi latérale périphérique du boîtier présente une ouverture inférieure obturée par un socle. Une tige filetée est soudée sous le fond de la cuve. La tige traverse le socle. Un écrou vissé sur la tige permet d'assembler la paroi latérale périphérique, la bague et la cuve. Une telle réalisation permet de compenser les tolérances de fabrication ainsi que les variations dimensionnelles dues à la dilatation thermique. Toutefois, la présence de la tige filetée est une source importante de rebuts. En effet, une géométrie précise de la tige est nécessaire pour permettre l'assemblage du socle.

Il est connu du document WO 93/02609 de fixer une cuve à un boîtier au moyens de supports comportant chacun une tête qui est montée solidaire du bord de la cuve et un corps destiné à venir en prise avec le bord supérieur du boîtier. Cette disposition permet de s'affranchir de la présence d'une tige filetée sous le fond de la cuve. Toutefois, une telle construction ménage des espaces entre le boîtier et la cuve. Ces espaces rendent le nettoyage de l'appareil difficile. De plus l'assemblage de la cuve sur le boîtier nécessite des opérations de sertissage du bord de la cuve sur les supports.

L'objet de la présente invention est de proposer un appareil électrique de cuisson comportant une cuve montée fixe dans un boîtier, dont l'assemblage soit facilité.

Un autre objet de la présente invention est de proposer un appareil électrique de cuisson comportant une cuve montée fixe dans un boîtier, dont le nettoyage soit facilité.

Un autre objet de la présente invention est de proposer un appareil électrique de cuisson comportant une cuve montée fixe dans un boîtier, qui présente une construction peu onéreuse.

Un autre objet de la présente invention est de proposer un appareil électrique de cuisson comportant une cuve revêtue montée fixe dans un boîtier, qui présente une construction peu onéreuse.

Ces objets sont atteints avec un appareil électrique de cuisson comportant une cuve montée fixe dans un boîtier, la cuve comportant un bord supérieur, le boîtier comprenant une paroi latérale périphérique entourant la cuve à distance, au moins un élément de support et au moins un élément de retenue réalisés en matériau résistant en continu à la température du bord supérieur de la cuve, le bord supérieur de la cuve reposant sur le ou les élément(s) de support, le bord supérieur de la cuve étant maintenu par le ou les élément(s) de retenue, le ou les éléments de support étant montés sur la paroi latérale périphérique, du fait que le ou les éléments de retenue prennent appui sur le bord supérieur de la cuve et sont assemblés avec la paroi latérale périphérique. En d'autres termes, le ou les éléments de retenue sont disposés au dessus du bord supérieur de la cuve. Le ou les éléments de retenue peuvent être fixés directement sur la paroi latérale périphérique, ou être assemblés avec la paroi latérale périphérique par une ou plusieurs pièces intermédiaires. Cette disposition simplifie le montage et évite de devoir déformer le bord de la cuve pour fixer la cuve au boîtier. Il n'est pas nécessaire de prévoir une fixation entre le fond de la cuve et le fond du boîtier.

Selon une forme de réalisation, les éléments de retenue sont formés par des pièces de maintien assemblées avec la paroi latérale périphérique. Ces pièces de maintien peuvent être fixées directement sur la paroi latérale périphérique, ou être assemblées avec la paroi latérale périphérique par des pièces intermédiaires. Cette disposition permet de maintenir la cuve entre les pièces de maintien et la paroi latérale périphérique.

Selon une autre forme de réalisation, le ou les éléments de retenue appartiennent à une bague comportant un corps annulaire assemblé avec la paroi latérale périphérique. Le corps annulaire peut être fixé directement sur la paroi latérale périphérique, ou être assemblé avec la paroi latérale périphérique par des pièces intermédiaires. Cette disposition permet de maintenir la cuve entre la bague et la paroi latérale périphérique.

Avantageusement la bague comporte un joint prenant appui sur le bord supérieur de la cuve. Cette disposition permet de compenser les tolérances géométriques entre la bague et la cuve et permet d'obtenir une meilleure étanchéité entre la bague et la cuve. Le joint peut être annulaire. Le joint peut aussi être disposé seulement sur une partie du bord supérieur de la cuve, par exemple au voisinage d'une échancrure de versement ménagée dans le corps de la bague.

Avantageusement le corps annulaire est réalisé en matériau résistant en continu à la température du bord supérieur de la cuve. Le ou l'un des éléments de retenue peut être alors être ménagé sur le corps annulaire. En alternative, le joint est annulaire et présente une épaisseur suffisante pour permettre l'utilisation de matériau moins résistant pour le corps annulaire.

Selon un mode de réalisation, le corps annulaire est fixé à la paroi latérale périphérique, par exemple par vissage et/ou par clipsage grâce à des pattes élastiques munies de crochet.

Selon une première forme de réalisation, le ou les éléments de support sont montés sur la paroi latérale périphérique. En d'autre termes, le ou les éléments de support sont indépendants des éléments de retenue. Le ou les éléments de retenue fixés à la paroi latérale périphérique enserrent alors le bord supérieur de la cuve et la ou les pièces formant le ou les éléments de support. Le bord supérieur de la cuve peut présenter une forme quelconque. Cette disposition permet notamment d'utiliser des cuves identiques pour les appareils à cuve fixe et les appareils à cuve amovible.

Avantageusement alors, le ou les éléments de support (a) appartiennent à un anneau. Cette disposition simplifie le montage en réduisant le nombre de pièces à assembler.

Selon une deuxième forme de réalisation, le corps annulaire est formé par au moins deux parties comportant chacune au moins l'un des éléments de support et au moins l'un des éléments de retenue. Les parties du corps annulaire peuvent être assemblées ensemble, par exemple par vissage ou par clipsage.

Avantageusement alors, chaque partie comporte une gorge formant l'un des élément de support et l'un des éléments de retenue. Avantageusement alors le bord supérieur de la cuve est formé par une collerette extérieure horizontale. Cette disposition simplifie la réalisation du bord de la cuve. Avantageusement alors la collerette extérieure s'étend tout autour de la périphérie du bord supérieur de la cuve. En alternative, chaque partie peut notamment comporter une rainure externe, le bord de la cuve comportant alors deux languettes opposées retournées vers la paroi latérale de la cuve.

Selon une troisième forme de réalisation, le bord supérieur de la cuve présente une série de languettes externes et le corps annulaire comporte une série de logements présentant chacun une ouverture latérale pour l'introduction de l'une des languettes par rotation de la cuve par rapport au corps annulaire. Cette disposition concerne essentiellement les cuves rondes, le bord de la cuve étant de préférence circulaire.

Avantageusement alors, des moyens de blocage sont prévus pour bloquer au moins l'une des languettes externes de la cuve dans l'un des logements.

Avantageusement alors les moyens de blocage sont formés par une languette élastique issue du corps annulaire. En alternative, les moyens de maintien peuvent être formés par exemple par des pièces rapportées dans les zones d'introduction.

Selon un autre mode de réalisation, l'élément de support est formé par un anneau, le ou les éléments de retenue étant fixés à l'anneau, l'anneau étant fixé à la paroi latérale périphérique. Lorsque le ou les éléments de retenue appartiennent à une bague, le corps annulaire de la bague fixé à l'anneau enserre alors le bord supérieur de la cuve. Le bord de la cuve peut présenter une forme quelconque. Cette disposition permet également d'utiliser des cuves identiques pour les appareils à cuve fixe et les appareils à cuve amovible.

La paroi latérale périphérique du boîtier peut comporter une ouverture inférieure obturée par un socle présentant un fond. L'assemblage de l'anneau ou du corps annulaire de la bague sur la paroi latérale périphérique peut alors s'effectuer par des vis montées depuis l'intérieur du boîtier.

La paroi latérale périphérique du boîtier peut comporter un fond. L'assemblage de l'anneau ou du corps de la bague sur la paroi latérale périphérique peut alors s'effectuer par des vis montées depuis l'extérieur du boîtier.

Avantageusement alors, l'appareil comporte un organe de sécurité thermique et un organe de régulation montés sur le fond du socle ou sur le fond de la paroi latérale périphérique. Cette disposition permet d'éviter de souder des tiges filetées sous le fond de la cuve pour le montage des organes de régulation et des organes de sécurité. Cette disposition est particulièrement intéressante lorsque la cuve est revêtue.

L'invention sera mieux comprise à l'étude de sept exemples de réalisation et de variantes, pris à titre nullement limitatif, illustrés dans les figures annexées, dans lesquelles :
- la figure 1 est une vue en coupe transversale d'un premier exemple de réalisation d'une friteuse selon l'invention,
- la figure 2 est une vue en coupe d'un détail de la friteuse illustrée à la figure 1,
- la figure 3 est une vue en perspective de la face inférieure d'une bague appartenant à la friteuse illustrée aux figures 1 et 2,
- la figure 4 est une vue en coupe longitudinale du boîtier et de la cuve d'une variante de réalisation du premier exemple de réalisation, dans laquelle la partie inférieure du boîtier n'est pas représentée,
- la figure 5 est une vue en perspective de la variante montrée à la figure 4,
- la figure 6 est une vue en coupe d'un détail d'une autre variante de réalisation du premier exemple de réalisation,
- la figure 7 est une vue en coupe d'une variante de réalisation de la partie inférieure du premier exemple de réalisation,
- la figure 8 est une vue en perspective d'un deuxième exemple de réalisation d'une friteuse selon l'invention, dans lequel la partie latérale et la partie inférieure du boîtier ont été retirées,
- la figure 9 est une vue en coupe d'un détail de la friteuse illustrée à la figure 8,
- la figure 10 est une vue de dessus d'une cuve appartenant à un troisième exemple de réalisation d'une friteuse selon l'invention,
- la figure 11 est une vue en perspective d'une partie du boîtier du troisième exemple de réalisation d'une friteuse selon l'invention,
- la figure 12 est une vue partielle en coupe de la partie du boîtier illustrée à la figure 11,
- la figure 13 est une vue partielle en coupe d'un quatrième exemple de réalisation d'une friteuse selon l'invention,
- la figure 14 est une vue partielle en coupe d'un cinquième exemple de réalisation d'une friteuse selon l'invention,
- la figure 15 est une vue partielle en coupe d'un sixième exemple de réalisation d'une friteuse selon l'invention,
- la figure 16 est une vue partielle en coupe d'un septième exemple de réalisation d'une friteuse selon l'invention.

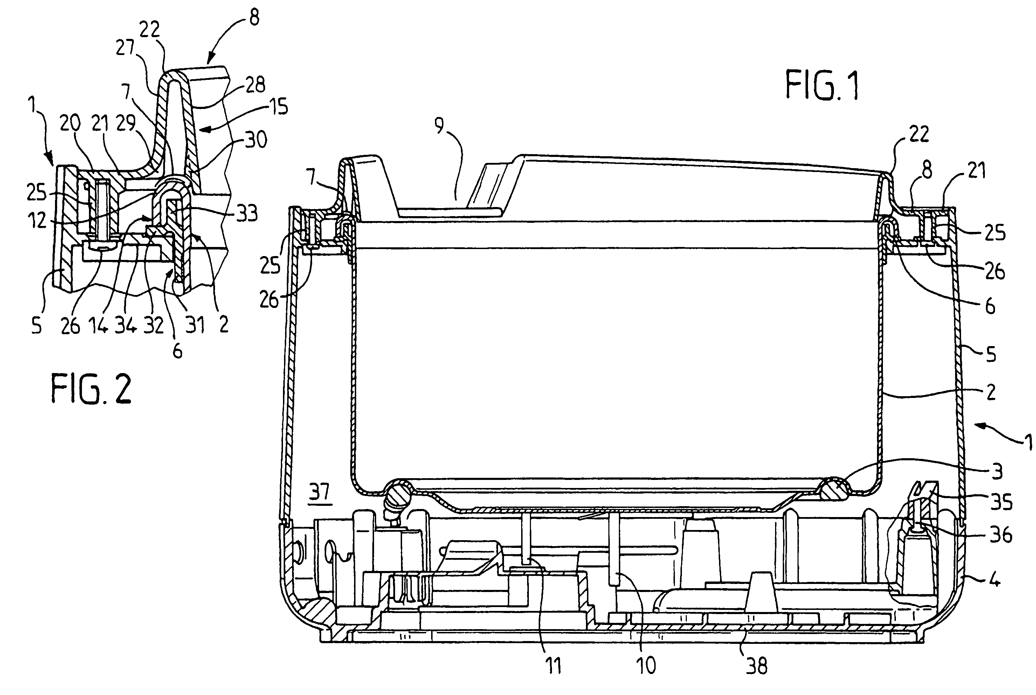

Un premier exemple de réalisation d'un appareil électrique de cuisson selon l'invention est illustré aux figures 1 à 3.

La figure 1 montre un boîtier 1 d'un friteuse, dans lequel est logé une cuve 2 associée à un élément chauffant 3. Le boîtier 1 comporte un socle 4, une paroi latérale périphérique 5, un anneau 6 de support de la cuve, et une bague 8 présentant une échancrure 9 de versement.

Une tige 10 fixée sous le fond de la cuve 2 est prévue pour le montage d'un organe de sécurité thermique tel qu'un fusible (non représenté à la figure 1). Une autre tige 11 fixée sous le fond de la cuve 2 est prévue pour le montage d'un organe de régulation tel qu'un thermostat (non représenté à la figure 1). La cuve 2 présente un bord supérieur 12 retourné. Le joint 7 est monté entre la bague 8 et le bord supérieur 12 de la cuve 2, tel que mieux visible à la figure 2.

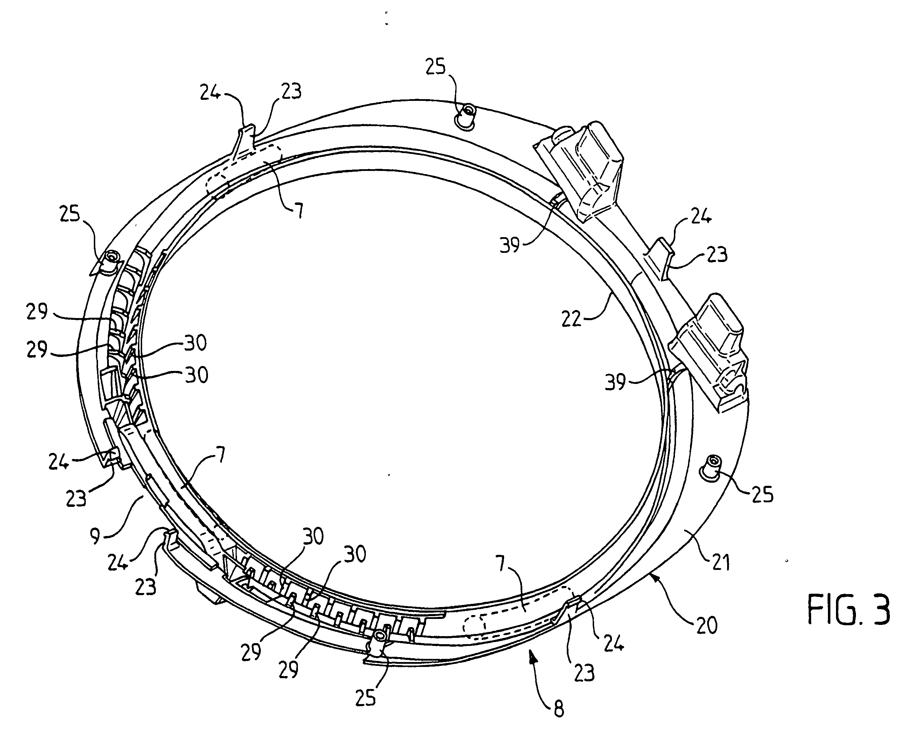

Tel que montré à la figure 3, la bague 8 comporte un corps annulaire 20 sous lequel est monté un joint 7 partiellement représenté. Le corps annulaire 20 comprend une collerette extérieure 21 prolongée par un rebord périphérique supérieur 22. Le corps annulaire 20 est réalisé en matériau résistant en continu à la température du bord supérieur 12 de la cuve 2, par exemple en PBTP chargé à 20% de fibres de verre. Des languettes élastiques 23 munies de crochets 24 sont issues de la face inférieure de la collerette extérieure 21. Les crochets 24 sont prévus pour venir en prise avec la paroi latérale périphérique 5. Des puits 25 sont issus de la face inférieure de la collerette extérieure 21. Les puits 25 sont prévus pour recevoir des vis 26 traversant la paroi latérale périphérique 5.

Tel que mieux visible à la figure 2, le rebord périphérique supérieur 22 présente une paroi latérale extérieure 27 raccordée en son sommet à une paroi latérale intérieure 28. L'échancrure 9, visible aux figures 1 et 3, est ménagée dans le rebord périphérique supérieur 22. La face interne de la paroi latérale extérieure 27 comporte une série de nervures transversales 29 de part et d'autre de l'échancrure 9. La face interne de la paroi latérale intérieure 28 comporte une série de nervures transversales 30 de part et d'autre de l'échancrure 9. Les nervures transversales 30 sont agencées en quinconce par rapport aux nervures transversales 29. Les nervures transversales 29, 30 sont prévues pour supporter le joint 7, partiellement représenté à la figure 3, seule la partie centrale et les extrémités du joint 7 étant représentées. Le joint 7 s'étend sur environ 90° de part et d'autre de l'échancrure 9. Le joint 7 est un joint torique. D'autres nervures transversales 39 sont agencées sur la face intérieure de la paroi latérale extérieure 27 en dehors de la zone de réception du joint 7.

L'anneau 6 de support de la cuve est réalisé en matériau résistant en continu à la température du bord supérieur 12 de la cuve 2, par exemple en PBTP chargé à 20% de fibres de verre. L'anneau 6 comporte une paroi latérale interne inférieure 31 raccordée à une collerette externe 32. Une nervure périphérique 33 est agencée sur la collerette externe 32, afin de rigidifier l'anneau 6.

La paroi latérale périphérique 5 est avantageusement réalisée en une matière ne résistant pas en continu à la température du bord supérieur 12 de la cuve 2, par exemple en polypropylène. La paroi latérale périphérique 5 présente une collerette interne 34 sur laquelle repose la collerette externe 32 de l'anneau 6. La collerette interne 34 présente des perçages prévus pour recevoir les vis 26. La collerette interne 34 présente des passages prévus pour recevoir les crochets 24 des languettes élastiques 23. Des renforts internes 35 sont ménagés dans la partie inférieure de la paroi latérale périphérique 5 pour recevoir des vis 36 montées sous le socle 4. La paroi latérale périphérique 5 comporte une ouverture inférieure 37 obturée par le socle 4. Le socle 4 présente un fond 38.

L'assemblage du boîtier 1 et de la cuve 2 s'effectue de la manière suivante. Le corps annulaire 20 de la bague 8 est retourné. Le joint 7 est mis en place sur la face inférieure du corps annulaire 20 de la bague 8 au dessus des nervures 29, 30. La cuve 2 est retournée sur le joint 7. Le bord supérieur 12 de la cuve 2 écrase alors le joint 7 contre le corps annulaire 20 pour réaliser une étanchéité entre la cuve 2 et la bague 8 au niveau de l'échancrure 9 et des nervures 29, 30. Le bord supérieur 12 de la cuve 2 repose également sur les nervures transversales 39. L'anneau 6 retourné est mis en place sur la face inférieure du bord 12 de la cuve 2. La paroi latérale périphérique 5 retournée est mise en place sur l'anneau 6. Les crochets 24 des languettes élastiques 23 viennent alors en prise dans les passages de la collerette interne 34 de la paroi latérale périphérique 5. Le joint 7, la cuve 2 et l'anneau 6 sont alors maintenus entre le corps annulaire 20 et la paroi latérale périphérique 5. Les vis 26 sont ensuite vissées dans les puits 25 pour conforter l'assemblage. L'anneau 6 forme un élément de support 14 de la cuve 2. La bague 8 forme un élément de retenue 15 de la cuve 2. La cuve 2 est alors solidaire de la partie supérieure du boîtier 1. La partie inférieure du boîtier 1, formée par le socle 4, peut être mise en place au moyen des vis 36 après le câblage de l'appareil.

Le maintien de la cuve permet d'éviter une fixation de la cuve avec la partie inférieure du boîtier. De plus, une cuve présentant un bord supérieur retourné peut également être utilisée comme cuve amovible, ce qui permet de diminuer le nombre d'outillages différents.

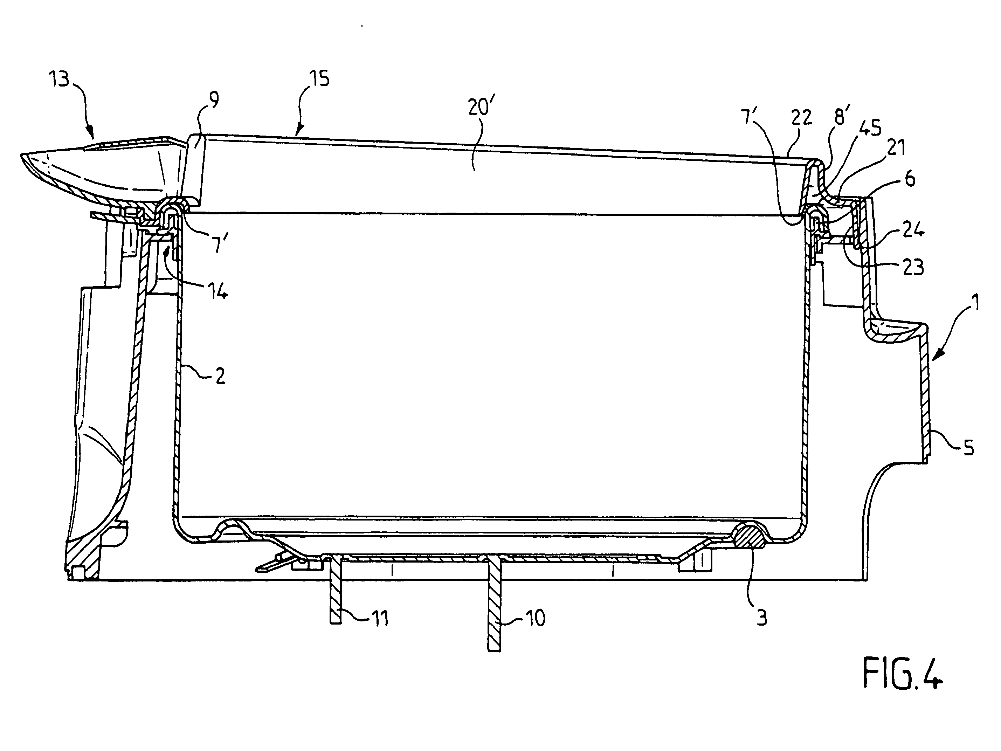

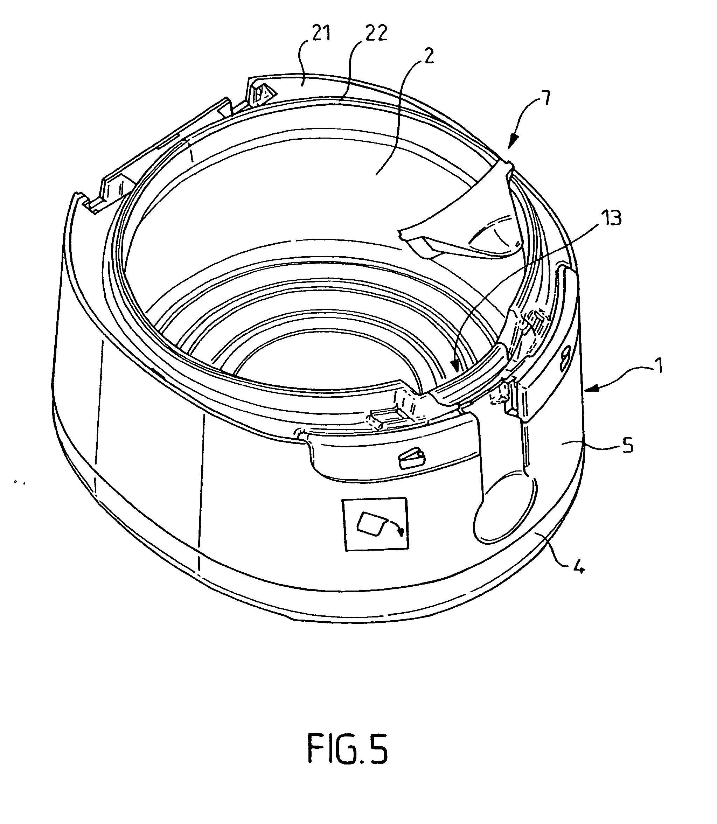

Une variante de réalisation est illustrée aux figures 4 et 5.

Cette variante diffère de l'exemple de réalisation précédent en ce que le joint 7' est annulaire. Le corps annulaire 20' de la bague 8' comporte des nervures 45 pour maintenir le joint 7' contre le bord supérieur 12 de la cuve 2. L'anneau 6 forme l'élément de support 14 de la cuve 2. La bague 8' forme l'élément de retenue 15 de la cuve 2. La figure 4 montre un accessoire de versement 13 mis en place dans l'échancrure 9. La figure 5 montre l'accessoire de versement 13 retiré du boîtier 1.

Cette disposition permet d'assurer une meilleure étanchéité entre la bague 8' et la cuve 2.

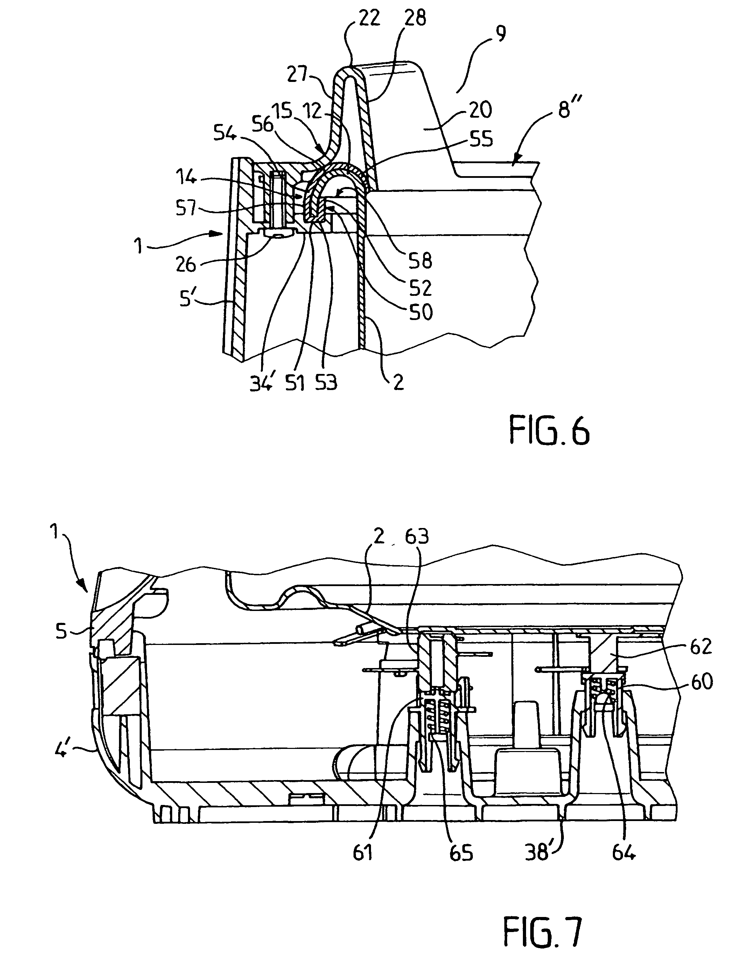

Une autre variante de réalisation est illustrée à la figure 6.

Cette variante diffère de l'exemple de réalisation précédent en ce que l'extrémité du bord supérieur 12 retourné de la cuve 2 est montée dans un joint annulaire 50 en U. Le joint annulaire 50 est logé dans une rainure annulaire 51 de la collerette interne 34' de la paroi latérale périphérique 5'. Le joint annulaire comporte une paroi intérieure 52, une paroi de base 53 et une paroi extérieure 54. La paroi extérieure 54 du joint annulaire 50 comporte une extrémité libre 55 interposée entre la paroi latérale intérieure 28 du corps 20 de la bague 8" et le bord supérieur 12 de la cuve 2. La paroi extérieure 54 du joint annulaire 50 comporte une partie médiane 56 interposée entre la paroi latérale extérieure 27 et le bord supérieur 12 de la cuve 2. Le joint annulaire 50 constitue un anneau 58 formant l'élément de support 14. La bague 8" forme l'élément de retenue 15. Ainsi la bague 8" ne comporte pas de joint comme dans le premier exemple de réalisation ou dans la variante précédente. La paroi extérieure 54 présente une autre extrémité 57 raccordée à la paroi de base 53.

Ces dispositions permettent de simplifier le montage grâce à la limitation du nombre de pièces assemblées. Ces dispositions permettent également d'assurer une étanchéité entre la cuve et la bague 8".

A titre de variante complémentaire, le joint 50 peut être réalisé en deux parties, par exemple d'une part la paroi intérieure 52, la paroi de base 53 et l'extrémité 57 de la paroi extérieure 54, et d'autre part l'extrémité libre 55 et/ou la partie médiane 56 de la paroi extérieure 54.

Une variante de réalisation de la partie inférieure du boîtier est illustrée à la figure 7.

Le socle 4' présente un fond 38' comportant un support 60 prévu pour recevoir un organe de sécurité thermique 62 tel qu'un fusible thermique et un support 61 prévu pour recevoir un organe de régulation 63 tel qu'un thermostat. Les supports 60, 61 sont montés chacun sur un moyen de rappel 64, 65 de manière à assurer un contact constant avec le fond de la cuve 2 indépendamment des tolérances de fabrication et de la dilatation thermique.

Ces dispositions permettent de supprimer les tiges de fixation de l'organe de sécurité et de l'organe de régulation. La fabrication de la cuve est ainsi simplifiée. Pour une cuve revêtue, la suppression des tiges de fixation de l'organe de sécurité et de l'organe de régulation est particulièrement intéressante car la fixation desdites tiges sur une cuve revêtue est compliquée à réaliser. En outre, les problèmes de qualité dus à la présence des tiges de fixation sont ainsi totalement supprimés.

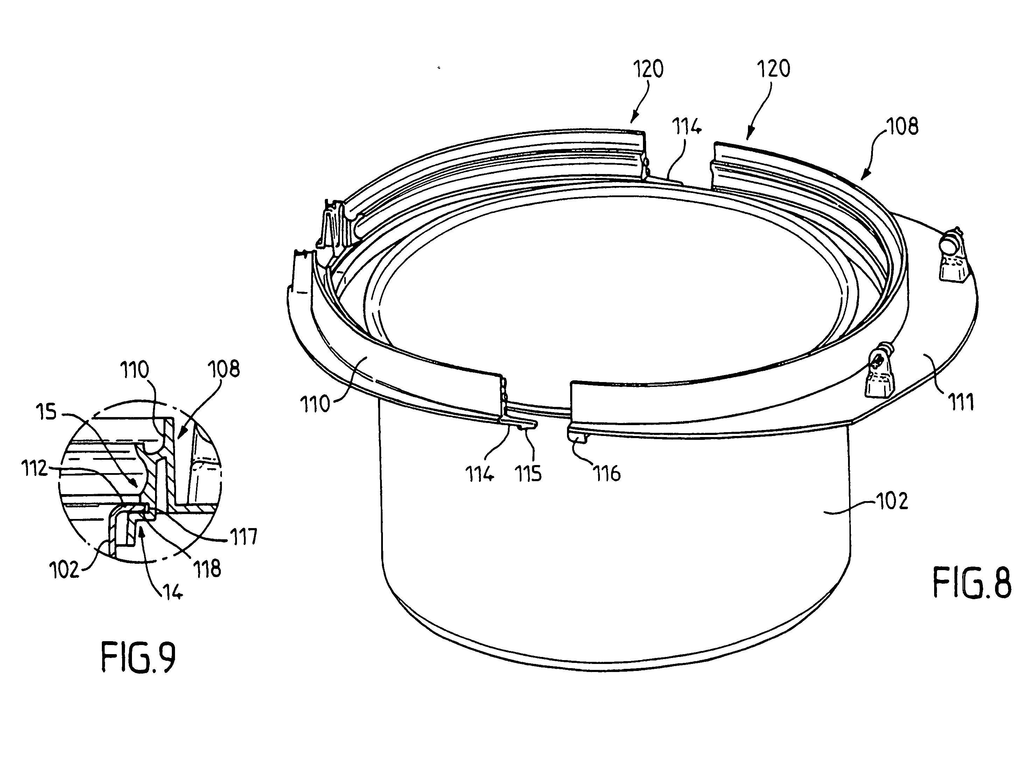

Un deuxième exemple de réalisation est illustré aux figures 8 et 9.

Cet exemple de réalisation diffère de l'exemple de réalisation précédent en ce que la bague 108 comporte un corps annulaire 120 formé de deux pièces 110, 111 montées sur le bord supérieur 112 de la cuve 102. La pièce 110 comporte deux languettes élastiques 114 terminées chacune par un crochet 115 prévu pour être bloqué par une butée 116 issue de la pièce 111. A titre de variante, d'autres moyens de fixation pourraient être envisagés pour solidariser les pièces 110, 111, par exemple des vis.

Les pièces 110, 111 comportent chacune une gorge 117 prévue pour recevoir une partie d'une collerette extérieure 118 du bord supérieur 112 de la cuve 102. Tel qu'illustré aux figures 8 et 9, la collerette extérieure 118 est horizontale et s'étend tout autour de la périphérie du bord supérieur 112 de la cuve 102. Les gorges 117 s'étendent sur toute la périphérie de la face interne de la bague 108 et forment les éléments de support 14 ainsi que les éléments de retenue 15.

L'assemblage du boîtier et de la cuve 102 s'effectue de la manière suivante. Les gorges 117 des pièces 110, 111 sont engagées sur la collerette extérieure 118 du bord 112 de la cuve 102. Le rapprochement des pièces 110, 111 permet de bloquer les crochets 115 au moyen des butées 116. La cuve 102 est ainsi immobilisée dans la bague 108 formée par les pièces 110, 111 assemblées. La bague 108 peut ensuite être montée sur la paroi latérale périphérique, non montrée aux figures 8 et 9.

A titre de variante pour ce deuxième exemple de réalisation, la collerette extérieure 118 ne s'étend pas nécessairement sur toute la périphérie de la cuve. La collerette extérieure 118 peut par exemple être formée par deux languettes s'étendant le long de deux parois opposées du bord supérieur de la cuve.

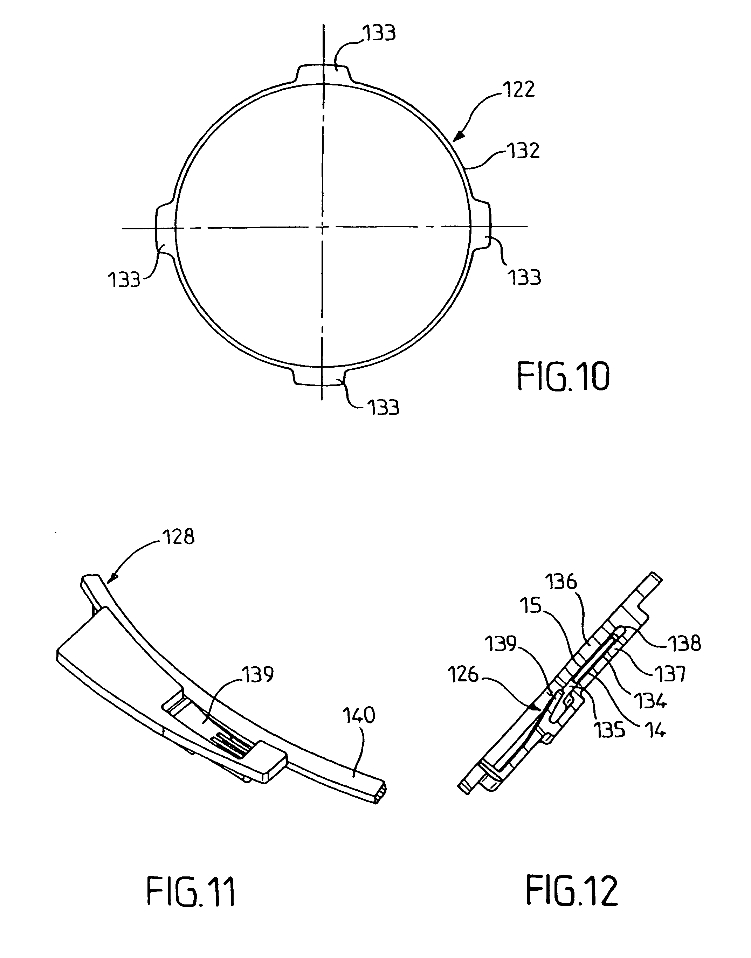

Un troisième exemple de réalisation est illustré aux figures 10 à 12.

Cet exemple de réalisation diffère de l'exemple de réalisation précédent en ce que la cuve 122 présente un bord supérieur 132 circulaire. Le bord supérieur 132 présente une série de languettes externes 133. La bague 128 est formée par un corps annulaire 140 présentant une série de logements 134. Chaque logement 134 présente une ouverture latérale 135 pour l'introduction de l'une des languettes 133 par rotation de la cuve 122 par rapport au corps annulaire 140 de la bague 128. Les languettes externes 133 de la cuve 122 sont alors maintenues par une paroi supérieure 136, une paroi inférieure 137 et une paroi latérale 138 de la bague 128. Les logements 134 forment les éléments de support 14 ainsi que les éléments de retenue 15.

Des moyens de blocage 126 sont prévus pour bloquer au moins l'une des languettes externes 133 de la cuve 122 dans l'un des logements 134. Les moyens de blocage 126 sont par exemple formés par une languette élastique 139 issue du corps annulaire 140 de la bague 128. A titre de variante, d'autres moyens de blocage pourraient être envisagées, notamment une pièce rapportée par clipsage ou par vissage sous le corps annulaire 140 de la bague 128 pour obturer au moins partiellement l'ouverture latérale 135.

La bague 128 peut ensuite être montée sur la paroi latérale périphérique, non montrée aux figures 10 à 12.

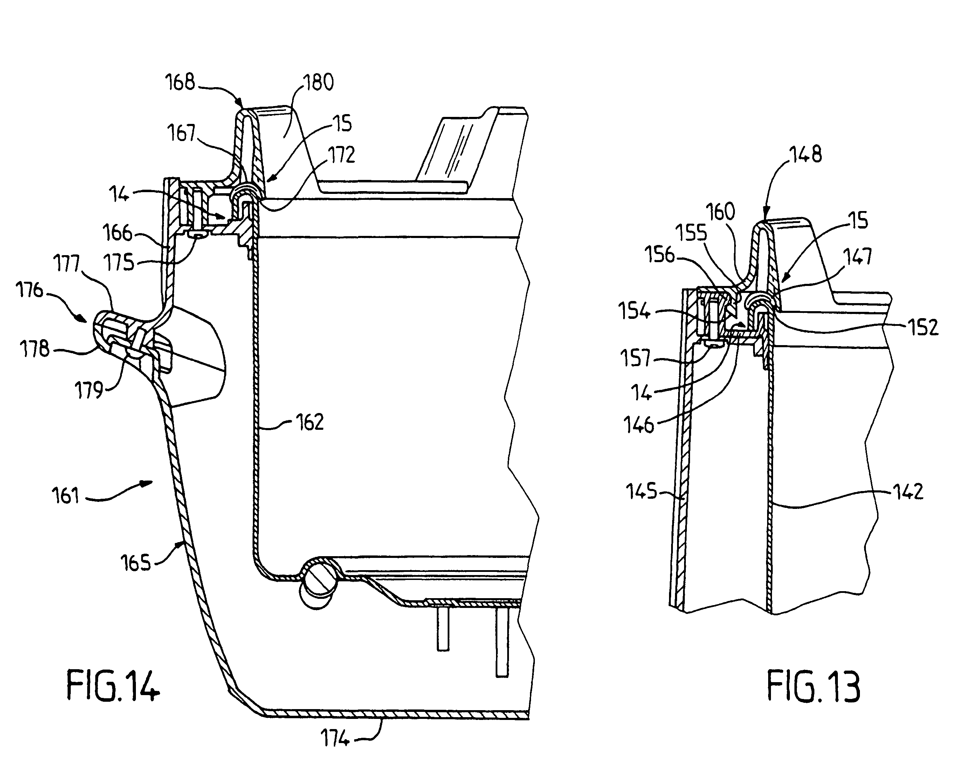

Un quatrième exemple de réalisation est illustré à la figure 13.

Cet exemple de réalisation diffère du premier exemple de réalisation en ce que le corps annulaire 160 de la bague 148 est assemblé avec l'anneau 146 et en ce que l'anneau 146 est assemblé avec la paroi latérale périphérique 145. Le corps annulaire 160 comporte par exemple une série de crochets 154 issus de pattes élastiques 155 et coopérant avec des butées 156 issues de l'anneau 146. L'anneau 146 est assemblé avec la paroi latérale périphérique 145 par exemple au moyen de vis 157. La bague 148 comporte également un joint 147 monté entre le corps annulaire 160 et le bord supérieur 152 de la cuve 142.

Le montage de cet exemple de réalisation est le suivant. Le corps annulaire 160 de la bague 148 est retourné. Le joint 147 est mis en place sur le corps annulaire 160 retourné. La cuve 142 retournée est mise en place sur le joint 147. Le bord supérieur 152 de la cuve 142 est en appui contre le joint 147. L'anneau 146 retourné est assemblé avec le corps annulaire 160 de la bague 148 pour bloquer la cuve 142 et le joint 147 grâce aux crochets 154. L'ensemble peut alors être manipulé. La paroi latérale périphérique 145 retournée est ensuite assemblée sur l'anneau 146 au moyen des vis 157. L'anneau 146 peut ensuite être monté sur la paroi latérale périphérique, non montrée à la figure 13. L'anneau 146 forme l'élément de support 14. La bague 148 forme l'élément de retenue 15.

Un cinquième exemple de réalisation est illustré à la figure 14.

Cet exemple de réalisation diffère de l'exemple de réalisation précédent en ce que l'anneau 166 est monté sur une paroi latérale périphérique 165 comportant un fond 174. La bague 168 est formée par un corps annulaire 180 et un joint 167. Le corps annulaire 180 est assemblé avec l'anneau 166 au moyen de vis 175. La cuve 162 et le joint 167 sont maintenus entre le corps annulaire 180 et l'anneau 166.

Le boîtier 161 comporte des poignées 176 réalisées en deux parties. Les poignées 176 présentent une paroi supérieure 177 appartenant à l'anneau 166 et une paroi inférieure 178 appartenant à la paroi latérale périphérique 165.

L'assemblage entre la paroi latérale périphérique 165 et l'anneau 166 s'effectue par exemple au moyen de vis 179 montées au niveau des poignées 172. L'anneau 166 forme l'élément de support 14. La bague 168 forme l'élément de retenue 15.

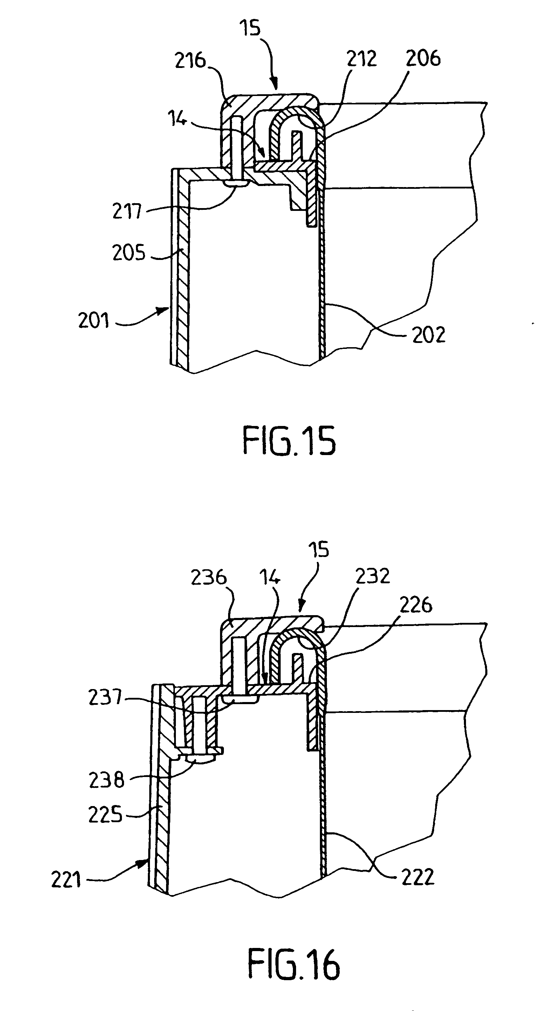

Un sixième exemple de réalisation est illustré à la figure 15.

Cet exemple de réalisation diffère du premier exemple de réalisation en ce que les éléments de retenue 15 sont formés par des pièces de maintien 216 fixées sur la paroi latérale périphérique 205 du boîtier 201 au moyen de vis 217. L'élément de support 14 est formé par un anneau 206 disposé sur la paroi latérale périphérique 205. Le bord supérieur 212 de la cuve 202 repose sur l'anneau 206.

Un septième exemple de réalisation est illustré à la figure 16.

Cet exemple de réalisation diffère de l'exemple de réalisation précédent en ce que les éléments de retenue 15 sont formés par des pièces de maintien 236 fixées sur un anneau 226 au moyen de vis 237. L'anneau 226 est fixé à la paroi latérale périphérique 205 au moyen de vis 238. Le bord supérieur 232 de la cuve 222 repose sur l'anneau 226. L'élément de support 14 est formé par l'anneau 226.

A titre de variante pour les premier, quatrième et sixième exemples de réalisation, les éléments de supports 14 ne sont pas nécessairement formés par un anneau 6, 58, 146, 206, mais peuvent par exemple être constitués par des plots de support espacés les uns des autres.

A titre de variante complémentaire, les organes de sécurité thermique et de régulation peuvent être montés de manière flottante sur le fond du socle ou sur le fond de la paroi latérale périphérique pour les différents exemples de réalisations et leurs variantes.

La présente invention n'est nullement limitée aux exemples de réalisation décrits et à leurs variantes, mais englobe de nombreuses modifications dans le cadre des revendications.

## Revendications

1. Appareil électrique de cuisson comportant une cuve (2 ; 102 ; 122 ; 142 ; 162 ; 202 ; 222) montée fixe dans un boîtier (1 ; 161 ; 201 ; 221), la cuve comportant un bord supérieur (12 ; 112 ; 132 ; 152 ; 172 ; 212 ; 232), le boîtier comprenant une paroi latérale périphérique (5 ; 5' ; 105 ; 125 ; 145 ; 165 ; 205 ; 225) entourant la cuve à distance, au moins un élément de support (14) et au moins un élément de retenue (15) réalisés en matériau résistant en continu à la température du bord supérieur de la cuve, le bord supérieur de la cuve reposant sur le ou les élément(s) de support (14), le bord supérieur de la cuve étant maintenu par le ou les élément(s) de retenue (15), le ou les éléments de support (14) étant montés sur la paroi latérale périphérique, **caractérisé en ce que** le ou les éléments de retenue (15) prennent appui sur le bord supérieur (12) de la cuve (2 ; 102 ; 122 ; 142 ; 162 ; 202 ; 222) et sont assemblés avec la paroi latérale périphérique (5 ; 5' ; 105 ; 125 ; 145 ; 165 ; 205 ; 225).

2. Appareil électrique de cuisson selon la revendication 1, **caractérisé en ce que** les éléments de retenue (15) sont formés par des pièces de maintien (216, 236) assemblées avec la paroi latérale périphérique (205 ; 225).

3. Appareil électrique de cuisson selon la revendication 1, **caractérisé en ce que** le ou les éléments de retenue (15) appartiennent à une bague (8 ; 8' ; 8" ; 108 ; 128 ; 148 ; 168) comportant un corps annulaire (20 ; 20' ; 120 ; 140 ; 160 ; 180) assemblé avec la paroi latérale périphérique (5 ; 5' ; 105 ; 125 ; 145 ; 165).

4. Appareil électrique de cuisson selon la revendication 3, **caractérisé en ce que** la bague (8 ; 8' ; 148 ; 168) comporte un joint (7 ; 7' ; 147 ; 167) prenant appui sur le bord supérieur (12 ; 152 ; 172) de la cuve (2 ; 142 ; 162).

5. Appareil électrique de cuisson selon l'une des revendications 3 ou 4, **caractérisé en ce que** le corps annulaire (20 ; 20' ; 120 ; 140 ; 160 ; 180) est réalisé en matériau résistant en continu à la température du bord supérieur de la cuve.

6. Appareil électrique de cuisson selon la revendication 5, **caractérisé en ce que** le ou l'un des éléments de retenue (15) est ménagé sur le corps annulaire (20 ; 20' ; 120 ; 140 ; 160 ; 180).

7. Appareil électrique de cuisson selon l'une des revendications 3 à 6, **caractérisé en ce que** le corps annulaire (20 ; 20' ; 120 ; 140) est fixé à la paroi latérale périphérique (5 ; 5' ; 105 ; 125).

8. Appareil électrique de cuisson selon l'une des revendications 1 à 7, **caractérisé en ce que** le ou les éléments de support (14) sont montés sur la paroi latérale périphérique (5 ; 5').

9. Appareil électrique de cuisson selon l'une des revendications 1 à 8, **caractérisé en ce que** le ou les éléments de support (14) appartiennent à un anneau (6 ; 58 ; 146 ; 206 ; 226).

10. Appareil électrique de cuisson selon la revendication 7, **caractérisé en ce que** le corps annulaire (120) est formé par au moins deux parties (110 ; 111) comportant chacune au moins l'un des éléments de support (14) et au moins l'un des éléments de retenue (15).

11. Appareil électrique de cuisson selon la revendication 10, **caractérisé en ce que** chaque partie (110 ; 111) comporte une gorge (117) formant l'un des éléments de support (14) et l'un des éléments de retenue (15).

12. Appareil électrique de cuisson selon la revendication 11, **caractérisé en ce que** le bord supérieur (112) de la cuve (102) est formé par une collerette extérieure (118) horizontale.

13. Appareil électrique de cuisson selon la revendication 12, **caractérisé en ce que** la collerette extérieure (118) s'étend tout autour de la périphérie du bord supérieur (112) de la cuve (102).

14. Appareil électrique de cuisson selon l'une des revendications 3, 5, 6, 7 et 8, **caractérisé en ce que** le bord supérieur (132) de la cuve (122) présente une série de languettes externes (133) et **en ce que** le corps annulaire (140) comporte une série de logements (134) présentant chacun une ouverture latérale (135) pour l'introduction de l'une des languettes (133) par rotation de la cuve (122) par rapport au corps annulaire (140).

15. Appareil électrique de cuisson selon la revendication 14, **caractérisé en ce que** des moyens de blocage (126) sont prévus pour bloquer au moins l'une des languettes externes (133) de la cuve (122) dans l'un des logements (134).

16. Appareil électrique de cuisson selon la revendication 15, **caractérisé en ce que** les moyens de blocage (126) sont formés par une languette élastique (139) issue du corps annulaire (140).

17. Appareil électrique de cuisson selon l'une des revendications 1 à 6, **caractérisé en ce que** l'élément de support (14) est formé par un anneau (146 ; 166 ; 226), le ou les éléments de retenue (15) étant fixés à l'anneau (146 ; 166 ; 226), l'anneau (146 ; 166 ; 226) étant fixé à la paroi latérale périphérique (145 ; 165 ; 225)

18. Appareil électrique de cuisson selon l'une des revendications 1 à 17, **caractérisé en ce que** la paroi latérale périphérique (5) comporte une ouverture inférieure (37) obturée par un socle (4 ; 4') présentant un fond (38 38').

19. Appareil électrique de cuisson selon l'une des revendications 1 à 17, **caractérisé en ce que** la paroi latérale périphérique (165) comporte un fond (174).

20. Appareil électrique de cuisson selon l'une des revendications 18 ou 19, **caractérisé en ce qu'**il comporte un organe de sécurité thermique (62) et un organe de régulation (63) montés sur le fond (38') du socle (4') ou sur le fond (174) de la paroi latérale périphérique (165).

## Patentansprüche

1. Elektrisches Gargerät mit einer Wanne (2; 102; 122; 142; 162; 202; 222), die fest in einem Gehäuse (1; 161; 201; 221) angebracht ist, wobei die Wanne einen oberen Rand (12, 112; 132; 152; 172; 212; 232) aufweist, wobei das Gehäuse eine Seitenumfangswand (5; 5'; 105; 125; 145; 165; 205; 225) aufweist, welche die Wanne mit einem Abstand umgibt, mindestens ein Trageelement (14) und mindestens ein Rückhalteelement (15), die aus einem Material hergestellt sind, das dauerhaft gegen die Temperatur des oberen Randes der Wanne beständig ist, wobei der obere Rand der Wanne auf dem oder den Trageelement(en) (14) ruht, wobei der obere Rand der Wanne von dem oder den Rückhalteelement(en) (15) gehalten ist, wobei das oder die Trageelement(e) (14) an der Seitenumfangswand angebracht sind, **dadurch gekennzeichnet, dass** das oder die Rückhalteelement(e) (15) sich auf den oberen Rand (12) der Wanne (2; 102; 122; 142; 162; 202; 222) stützen und mit der Seitenumfangswand (5; 5'; 105; 125; 145; 165; 205; 225) zusammengefügt sind.

2. Elektrisches Gargerät nach Anspruch 1, **dadurch gekennzeichnet, dass** die Rückhalteelemente (15) durch Halteteile (216; 236) gebildet sind, die mit der Seitenumfangswand (205; 225) zusammengefügt sind.

3. Elektrisches Gargerät nach Anspruch 1, **dadurch gekennzeichnet, dass** das oder die Rückhalteelemente (15) zu einem Ring (8; 8'; 8"; 108; 128; 148; 168) gehören, der einen ringförmigen Körper (20; 20'; 120; 140; 160; 180) aufweist, der mit der Seitenumfangswand (5; 5'; 105; 125; 145; 165) zusammengefügt ist.

4. Elektrisches Gargerät nach Anspruch 3, **dadurch gekennzeichnet, dass** der Ring (8; 8'; 148; 168) eine Dichtung (7; 7'; 147; 167) aufweist, die sich auf den oberen Rand (12; 152; 172) der Wanne (2; 142; 162) stützt.

5. Elektrisches Gargerät nach Anspruch 3 oder 4, **dadurch gekennzeichnet, dass** der ringförmige Körper (20; 20'; 120; 140; 160; 180) aus einem Material hergestellt ist, das dauerhaft gegen die Temperatur des oberen Randes der Wanne beständig ist.

6. Elektrisches Gargerät nach Anspruch 5, **dadurch gekennzeichnet, dass** das oder eines der Rückhalteelemente (15) auf dem ringförmigen Körper (20; 20'; 120; 140; 160; 180) vorgesehen ist.

7. Elektrisches Gargerät nach einem der Ansprüche 3 bis 6, **dadurch gekennzeichnet, dass** der ringförmige Körper (20; 20'; 120; 140) an der Seitenumfangswand (5; 5'; 105; 125) befestigt ist.

8. Elektrisches Gargerät nach einem der Ansprüche 1 bis 7, **dadurch gekennzeichnet, dass** das oder die Trageelemente (14) an der Seitenumfangswand (5; 5') angebracht sind.

9. Elektrisches Gargerät nach einem der Ansprüche 1 bis 8, **dadurch gekennzeichnet, dass** das oder die Trageelemente (14) zu einem Ringteil (6; 58; 146; 206; 226) gehören.

10. Elektrisches Gargerät nach Anspruch 7, **dadurch gekennzeichnet, dass** der ringförmige Körper (120) durch mindestens zwei Abschnitte (110; 111) gebildet ist, die jeweils mindestens eines der Trageelemente (14) und mindestens eines der Rückhalteelemente (15) aufweisen.

11. Elektrisches Gargerät nach Anspruch 10, **dadurch gekennzeichnet, dass** jeder Abschnitt (110; 111) eine Nut (117) aufweist, die eines der Trageelemente (14) und eines der Rückhalteelemente (15) bildet.

12. Elektrisches Gargerät nach Anspruch 11, **dadurch gekennzeichnet, dass** der obere Rand (112) der Wanne (102) durch einen horizontalen Außenkragen (118) gebildet ist.

13. Elektrisches Gargerät nach Anspruch 12, **dadurch gekennzeichnet, dass** sich der Außenkragen (118) um den gesamten Umfang des oberen Randes (112) der Wanne (102) erstreckt.

14. Elektrisches Gargerät nach einem der Ansprüche 3, 5, 6, 7, 8 **dadurch gekennzeichnet, dass** der obere Rand (132) der Wanne (122) eine Reihe von Außenlaschen (133) aufweist und dass der ringförmige Körper (140) eine Reihe von Aufnahmen (134) aufweist, die jeweils eine seitliche Öffnung (135) zum Einführen einer der Laschen (133) durch Drehung der Wanne (122) bezüglich des ringförmigen Körpers (140) aufweisen.

15. Elektrisches Gargerät nach Anspruch 14, **dadurch gekennzeichnet, dass** Blockierungsmittel (126) vorgesehen sind, um mindestens eine der Außenlaschen (133) der Wanne (122) in einer der Aufnahmen (134) zu blockieren.

16. Elektrisches Gargerät nach Anspruch 15, **dadurch gekennzeichnet, dass** die Blockierungsmittel (126) durch eine elastische Lasche (139) gebildet sind, die aus dem ringförmigen Körper (140) hervorgeht.

17. Elektrisches Gargerät nach einem der Ansprüche 1 bis 6, **dadurch gekennzeichnet, dass** das Trageelement (14) durch ein Ringteil (146; 166; 226) gebildet ist, wobei das oder die Rückhalteelemente (15) am Ringteil (146; 166; 226) befestigt sind und der Ringteil (146; 166; 226) an der Seitenumfangswand (145; 165; 225) befestigt ist.

18. Elektrisches Gargerät nach einem der Ansprüche 1 bis 17, **dadurch gekennzeichnet, dass** die Seitenumfangswand (5) eine untere Öffnung (37) aufweist, die durch einen Sockel (4; 4') verschlossen ist, der einen Boden (38; 38') aufweist.

19. Elektrisches Gargerät nach einem der Ansprüche 1 bis 17, **dadurch gekennzeichnet, dass** die Seitenumfangswand (165) einen Boden (174) aufweist.

20. Elektrisches Gargerät nach Anspruch 18 oder 19, **dadurch gekennzeichnet, dass** es ein Wärmeschutzorgan (62) und ein Regulierungsorgan (63) aufweist, die am Boden (38') des Sockels (4') oder am Boden (174) der Seitenumfangswand (165) angebracht sind.

## Claims

1. An electric cooking appliance having a bowl (2; 102; 122; 142; 162; 202; 222) mounted non-removably in a housing (1; 161; 201; 221), at least one support element (14) and at least one retaining element (5), the bowl having a top edge (12; 112; 132; 152; 172; 212; 232), the housing having a peripheral side wall (5; 5'; 105; 125; 145; 165; 205; 225) surrounding the bowl while being spaced apart therefrom, and the elements being made of a material that can withstand continuously the temperature of the top edge of the bowl, the top edge of the bowl resting on the support element(s) (14), the top edge of the bowl being held by the retaining element(s) (15), the support element(s) (14) being mounted on the peripheral side wall, said electric cooking appliance being **characterized in that** the retaining element(s) (15) bear(s) against the top edge (12) of the bowl (2; 102; 122; 142; 162; 202; 222) and is/are assembled to the peripheral side wall (5; 5'; 105; 125; 145; 165; 205; 225).

2. An electric cooking appliance according to claim 1, **characterized in that** the retaining elements (15) are formed by holding pieces (216, 236) assembled to the penpheral side wall (205; 225).

3. An electric cooking appliance according to claim 1, **characterized in that** the retaining element(s) (15) is/are part of a ring (8; 8'; 8"; 108; 128; 148; 168) having an annular body (20; 20'; 120; 140; 160; 180) assembled to the peripheral side wall (5; 5'; 105; 125; 145; 165).

4. An electric cooking appliance according to claim 3, **characterized in that** the ring (8; 8'; 148; 168) includes a gasket (7; 7'; 147; 167) that bears against the top edge (12; 152; 172) of the bowl (2; 142; 162).

5. An electric cooking appliance according to claim 3 or claim 4, **characterized in that** the annular body (20; 20'; 120; 140; 160; 180) is made of a material that can withstand continuously the temperature of the top edge of the bowl.

6. An electric cooking appliance according to claim 5, **characterized in that** the retaining element(s) (15) is/are provided on the annular body (20; 20'; 120; 140; 160; 180).

7. An electric cooking appliance according to any one of claims 3 to 6, **characterized in that** the annular body (20, 20'; 120; 140) is fastened to the peripheral side wall (5; 5'; 105; 125).

8. An electric cooking appliance according to any one of claims 1 to 7, **characterized in that** the support element(s) (14) is/are mounted on the peripheral side wall (5; 5').

9. An electric cooking appliance according to any one of claims 1 to 8, **characterized in that** the support element (s) (14) is/are part of a collar (6; 58; 146; 206; 226).

10. An electric cooking appliance according to claim 7, **characterized in that** the annular body (120) is made up of at least two portions (110; 111), each of which is provided with at least one of the support elements (14) and with at least one of the retaining elements (15).

11. An electric cooking appliance according to claim 10, **characterized in that** each portion (110; 111) is provided with a groove (117) forming one of the support elements (14) and one of the retaining elements (15).

12. An electric cooking appliance according to claim 11, **characterized in that** the top edge (112) of the bowl (102) is formed by a horizontal outwardly-extending flange (118).

13. An electric cooking appliance according to claim 12, **characterized in that** the outwardly-extending flange (118) extends around the entire periphery of the top edge (112) of the bowl (102).

14. An electric cooking appliance according to any one of claims 3, 5, 6, 7, and 8, **characterized in that** the top edge (132) of the bowl (122) is provided with a series of outwardly-extending tongues (133), and **in that** the annular body (140) is provided with a series of recesses (134), each of which has a side opening (135) for enabling a respective one of the tongues (133) to be inserted by turning the bowl (122) relative to the annular body (140).

15. An electric cooking appliance according to claim 14, **characterized in that** securing means (126) are provided for securing at least one of the outwardly-extending tongues (133) of the bowl (122) in one of the recesses (134).

16. An electric cooking appliance according to claim 15, **characterized in that** the securing means (126) are formed by a resilient tongue (139) extending integrally from the annular body (140).

17. An electric cooking appliance according to any one of claims 1 to 6, **characterized in that** the support element (14) is formed by a collar (146; 166; 226), the retaining element(s) (15) being fastened to the collar (146; 166; 226), the collar (146; 166; 226) being fastened to the peripheral side wall (145; 165; 225).

18. An electric cooking appliance according to any one of claims 1 to 17, **characterized in that** the peripheral side wall (5) is provided with a bottom opening (37) that is closed off by a base (4; 4') having a bottom (38, 38').

19. An electric cooking appliance according to any one of claims 1 to 17, **characterized in that** the penpheral side wall (165) is provided with a bottom (174).

20. An electric cooking appliance according to claim 18 or claim 19, **characterized in that** it includes a thermal safety member (62) and a regulation member (63), which members are mounted on the bottom (38') of the base (4') or on the bottom (174) of the peripheral side wall (165).
